# EUROPÄISCHE PATENTSCHRIFT

(11) **EP 2 269 432 B1**
(45) Veröffentlichungstag und Bekanntmachung des Hinweises auf die Patenterteilung: **24.04.2013**
(21) Anmeldenummer: 10167711.0
(22) Anmeldetag: 29.06.2010
(51) Int. Cl.: A01B 63/11

(54) **Landwirtschaftliches Fahrzeug**
Agricultural vehicle
Véhicule agricole

(30) Priorität: 03.07.2009 DE 102009027453
(43) Veröffentlichungstag der Anmeldung: 05.01.2011
(73) Patentinhaber: DEERE & COMPANY, Moline, Illinois 61265-8098 (US)
(72) Erfinder: Bitter, Marcus, 68199, Mannheim (DE)
(74) Vertreter: Reichert, Christian

(56) Entgegenhaltungen:
- EP-A1- 1 388 279
- FR-A1- 2 722 941
- FR-A2- 2 560 733

## Beschreibung

Die Erfindung betrifft ein landwirtschaftliches Fahrzeug mit einem Arbeitsgerät, einer hydraulischen Anhängeeinrichtung zum Heben und Senken des Arbeitsgeräts, einer Hydraulikanordnung, welche wenigstens einen an der Anhängeeinrichtung angeordneten doppeltwirkenden Hydraulikzylinder umfasst, eine mit der Hydraulikanordnung verbundene elektronische Steuereinheit zur Ansteuerung der Hydraulikanordnung, wobei die Ansteuerung der Hydraulikanordnung durch von der elektronischen Steuereinheit generierte Steuersignale erfolgt und eine Druckbeaufschlagung des wenigstens einen Hydraulikzylinders umfasst, und wobei an einer eine hydraulisch gefederte Achse umfassenden Achsanordnung des landwirtschaftlichen Fahrzeugs Mittel zur Erfassung eines Lastzustands der Achse vorgesehen und die Steuersignale zur Ansteuerung der Hydraulikanordnung in Abhängigkeit von dem Lastzustand an der Achse generierbar sind.

Im Stand der Technik sind landwirtschaftliche Fahrzeuge bekannt, beispielsweise Traktoren oder Schlepper, aber auch Laderfahrzeuge wie Teleskoplader, die Hubwerksanordnungen oder Anhängeeinrichtungen aufweisen, an welche verschiedene Anbaugeräte zur Verrichtung verschiedenster Aufgaben angehängt werden können. Derartige Anhängeeinrichtungen können sowohl heckseitig als auch frontseitig angeordnet sein. Oftmals ist es erforderlich bzw. zweckmäßig, die Anbaugeräte mit einem vorgebbaren Anpressdruck auf den Boden auszustatten, um das Anbaugerät und das Fahrzeug in ihrem Zusammenwirken in einem optimierten Gesamtwirkungsgrad zu betreiben. Dieser Anpressdruck kann sich darauf beziehen, dass gezielt Gewicht vom Fahrzeug auf das Anbaugerät oder umgekehrt übertragen wird.

Ferner sind Anbaugeräte bzw. Anhängungen von Anbaugeräten bekannt, die bei einem vorgebbaren Druck vom Boden aus nach oben hin nachgeben, also mit einer sogenannten Schwimmstellungsfunktion mit vorgebbarem Anpressdruck versehen sind.

Derartige Hubwerksanordnungen bzw. Anhängeeinrichtungen werden beispielsweise in der EP 1 281 872 B1 und der DE 10 2004 033 315 A1 offenbart, wobei erstere ein elektrohydraulisches Hubwerk für eine landwirtschaftliche Arbeitsmaschine offenbart. Das offenbarte Hubwerk verfügt über einen doppeltwirkenden Hydraulikzylinder, dessen beide Druckräume mit Druck beaufschlagbar und über ein geeignetes Steuerventil ansteuerbar sind, wobei eine elektrohydraulische Drucksteuerung vorgesehen ist, die den Druck mittels Drucksensoren in den beiden Druckräumen erfasst und entsprechend steuert bzw. regelt.

Auch die DE 10 2004 033 315 A1 offenbart eine Hubwerksanordnung mit doppeltwirkenden Hubzylinder und einer Druckmittelvolumenstromsteuerung, wobei ein Druckbegrenzungsventil vorgesehen ist, durch welches ein Maximaldruck in der hydraulischen Anordnung in Abhängigkeit von Betriebszuständen des Hubwerks oder des Anbaugeräts gesteuert wird.

Ferner beschreibt die EP 1 388 279 A1 ein Steuersystem für eine Hubwerksanordnung, wobei eine Lastmessung und eine Positionsmessung am Hubwerk zur Positionssteuerung des Hubwerks herangezogen werden.

Den aus dem Stand der Technik bekannten Anordnungen sind gemein, dass sie als Regelgröße den Druck im Arbeitszylinder des Frontkrafthebers verwenden und dadurch gewisse Betriebszustände bei einer Anpressdruckregelung der Anhängevorrichtung nicht oder nur unzureichend berücksichtigt werden können. So ist es mit den oben genannten herkömmlichen Anpressdruckregelungen oftmals nur schwer erkennbar, dass sich beispielsweise das Anbaugerät nicht mehr auf dem Boden befindet. Ein weiterer unvorteilhafter Zustand bzw. nur schwer detektierbarer Fall stellt sich ein, wenn beispielsweise das Fahrzeug aufgrund zu hohem Anpressdruck des Anbaugeräts an einer Achse die Bodenhaftung verliert bzw. diesbezüglich ein Grenzwert erreicht wird.

Die der Erfindung zugrunde liegende Aufgabe wird darin gesehen, ein landwirtschaftliches Fahrzeug der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein landwirtschaftliches Fahrzeug der eingangs genannten Art derart ausgebildet, dass die Mittel zur Erfassung eines Lastzustands wenigstens einen Drucksensor umfassen, mit welchem ein Druck in wenigstens einem hydraulischen Federungszylinder der hydraulisch gefederten Achse ermittelbar ist und der Lastzustand an der Achse in Abhängigkeit von dem Druck ermittelbar ist, wobei der ermittelte Lastzustand der Achse zur Steuerung oder Regelung eines am Arbeitsgerät herrschenden Anpressdrucks auf den Boden herangezogen wird. An einer eine Achse umfassenden Achsanordnung des landwirtschaftlichen Fahrzeugs sind Mittel zur Erfassung eines Lastzustands der Achse vorgesehen, wobei die Steuersignale zur Ansteuerung der Hydraulikanordnung in Abhängigkeit von dem Lastzustands an der Achse generierbar sind. Eine Anpressdruckregelung kann also derart erfolgen, dass nicht die Drücke oder Kräfte am Hubwerk oder am Hydraulikzylinder des Hubwerks bzw. der Anhängeeinrichtung als Steuer- bzw. Regelgröße verwendet werden, sondern der Lastzustand auf der der Anhängeeinrichtung zugeordneten Achse einer Achsanordnung ermittelt und zur Steuerung bzw. Regelung des Anpressdrucks herangezogen werden kann. Die Verwendung des Lastzustands an der der Anhängeeinrichtung zugeordneten Achse als Steuer- bzw. Regelgröße ist daher sinnvoll, da durch eine Veränderung des Lastzustands auf der Achse Grenzwerte für eine Anpressdruckregelung des Hubwerks oder der Anhängeeinrichtung erfassbar und kontrollierbar sind. Sollte sich beispielsweise eine Last auf der einem Hubwerk oder einer Anhängeeinrichtung zugeordneten Achse nicht weiter erhöhen, ist dies ein Indikator dafür, dass das Hubwerk bzw. die Anhängeeinrichtung die an ihm bzw. ihr angehängte Last vom Boden abgehoben hat. Der Bodenanpressdruck hat damit einen operativen Minimalwert erreicht und die Last auf der Achse erhöht sich geometrisch bedingt im Wesentlichen nicht weiter. Im entgegen gesetzten Fall, wenn sich die Last auf der Achse nicht mehr verringert oder gar gleich Null ist, ist dies ein Indikator dafür, dass die Achse bzw. die an der Achse angeordneten Räder den Bodenkontakt verloren haben. Der Bodenanpressdruck hat damit einen operativen Maximalwert erreicht und die Last auf der Achse verringert sich nicht weiter, da sich lediglich der Fahrzeugrahmen und damit die der Anhängeeinrichtung zugeordnete Achse weiter vom Boden abheben wird. Von Vorteil ist, dass bei der Verwendung des Lastzustands an der der Anhängeeinrichtung zugeordneten Achse als Steuer- bzw. Regelgröße, das Steuer- und Antriebsvermögen des Fahrzeugs kontrollierbar ist. Mit einer Entlastung der der Anhängeeinrichtung zugeordneten Achse, nimmt die Steuerbarkeit (z.B. wenn die Vorderachse bei einer Frontanhängevorrichtung entlastet wird) bzw. die Traktionsfähigkeit des Fahrzeugs ab, da die Räder zunehmend weniger Lenk- bzw. Traktionskräfte auf den Boden aufbringen können. Des weiteren wird der Wirkungsgrad eines Allradantriebs unterstützt, wenn immer darauf geachtet werden kann, dass auch eine entsprechende Last auf der der Anhängeeinrichtung zugeordneten Achse liegt, da nur bei genügend Achslast ausreichend Traktion erzeugt werden kann. Somit wird auf vorteilhafte Weise die tatsächlich zu regelnde Kenngröße, nämlich der Lastzustand der der Anhängeeinrichtung zugeordneten Achse bzw. Achsanordnung direkt als Steuer- bzw. Regelgröße verwendet. Es wird nicht wie bisher üblich indirekt über eine andere Regelgröße versucht, beispielsweise über den Druck in einem Hydraulikzylinder einer Anhängeeinrichtung, die zu regelnde Kenngröße zu beeinflussen. Es ist kein aufwändiges Hydraulikzylinderventil für einen Hydraulikzylinder erforderlich, da in diesem Fall auch ein standarisiertes elektrohydraulisches Steuerventil ausreicht. Wie eingangs erwähnt, ist die Achse als hydraulisch gefederte Achse ausgebildet, wobei ein oder mehrere entsprechende Hydraulikzylinder bzw. hydraulische Federungszylinder an der Achsanordnung vorgesehene sind, die die Achse gegenüber einem Rahmen des Fahrzeugs abfedern. Die Hydraulikzylinder der gefederten Vorderachse sind vorzugsweise als doppeltwirkende Hydraulikspeicher ausgebildet, wobei beide Seiten (Kammern) der Hydraulikzylinder jeweils mit hydraulischen Druckspeichern verbunden sein können. Die Mittel zur Erfassung eines Lastzustands umfassen wenigstens einen Drucksensor, mit welchem ein Druck in wenigstens einem hydraulischen Federungszylinder der hydraulisch gefederten Achse ermittelbar und der Lastzustand an der Achse in Abhängigkeit von dem Druck bestimmbar ist. Vorzugsweise sind beide Seiten (Hydraulikkammern) des wenigstens einen hydraulischen Federungszylinders mit Drucksensoren verbunden und werden kontinuierlich überwacht. Die Drucksignale können zu einen Mikro-Controller bzw. einer elektronischen Steuereinheit gesandt und dort in eine resultierende Achslast bzw. in einen resultierenden Lastzustand der entsprechenden Achse umgerechnet werden.

Die Anhängeeinrichtung kann dabei als Frontanhängeeinrichtung und die Achse bzw. Achsanordnung, an der der Lastzustand ermittelt wird, als Vorderachse bzw. Vorderachsanordnung ausgebildet sein. Es ist jedoch ebenso denkbar, ein erfindungsgemäßes Fahrzeug mit einer Heckanhängeeinrichtung auszubilden, wobei der maßgebliche Lastzustand an der Hinterachse ermittelt werden kann. Über geeignete Umrechnungsfaktoren kann jedoch auch bei einer Frontanhängeeinrichtung der Lastzustand an der Hinterachse zur Steuerung bzw. Regelung der Hydraulikanordnung bzw. des Anpressdrucks der Hydraulikanordnung herangezogen werden, da es sich hierbei lediglich um sich verteilende Kräfteverhältnisse am Fahrzeug handelt. Ebenso ist es denkbar den Lastzustand an der Vorderachse zu ermitteln und diesen als Grundlage für eine Steuerung bzw. Regelung der Hydraulikanordnung bzw. des Anpressdrucks an einer Heckanhängeeinrichtung heranzuziehen. Vorzugsweise ist die Anhängeeinrichtung als sogenannte Dreipunkt-Anhängeeinrichtung ausgebildet.

In einer anderen erfindungsgemäßen Ausführungsform, z.B. für den Fall, dass keine gefederte Vorderachse am Fahrzeug ausgebildet ist, können auch andere Mittel zur Erfassung eines Lastzustands vorgesehen sein, so dass die Mittel zur Erfassung eines Lastzustands beispielsweise wenigstens einen Dehnungsmessstreifen umfassen, mit welchem eine Durchbiegung an der Achse sensorisch bestimmbar und der Lastzustand an der Achse in Abhängigkeit von der Durchbiegung an der Achse ermittelbar ist.

In einer weiteren anderen erfindungsgemäßen Ausführungsform können die Mittel zur Erfassung eines Lastzustands wenigstens einen Dehnungsmessstreifen umfassen, mit welchem eine Durchbiegung an einem Rahmenteil des Fahrzeugs ermittelbar ist und der Lastzustand an der Achse in Abhängigkeit von der Durchbiegung an dem Rahmenteil ermittelbar ist.

Ferner ist es möglich, dass wenigstens eine Kammer des wenigstens einen Hydraulikzylinders über ein ansteuerbares Schaltventil mit einem Hydrauliktank verbindbar ist. Dadurch wird gewährleistet, dass beispielsweise auch bei einem als doppelt wirkenden Hydraulikzylinder ausgebildeten Kraftheber einer Frontanhängeeinrichtung anhand eines einfachen, kostengünstigen Schaltventils, welches beispielsweise die Senkenseite des (Front-) Krafthebers zu einem Hydrauliktank hin verbindet, es möglich ist, den (Front-) Kraftheber im "traditionellen" einfach wirkenden Betrieb zu betreiben, wobei ein Teil der Funktionalität der Steuerung bzw. Regelung in Abhängigkeit des an der Achse des Fahrzeugs ermittelten Lastzustands erhalten bleibt.

Insgesamt von Vorteil ist, dass lediglich zwei Drucksensoren (einer für jede Seite bzw. Hydraulikkammer) am Federungszylinder ausreichen können um die erforderliche Steuerung bzw. Regelung zu realisieren. Aufwändige Sensoriken und Ventilsteuerungen sind nicht in dem Maße, wie es im Stand der Technik bekannt ist, notwendig, so dass ein Kostenvorteil besteht. Im Vergleich zu aus dem Stand der Technik bekannten Systemen muss kein Volumenstrom über ein Überdruckventil verlustreich abgeführt werden, so dass das erfindungsgemäße Fahrzeug bzw. die vorgesehene Hydraulikanordnung (Hydraulikeinrichtung) auch hinsichtlich eines Energie- und damit Kraftstoffverbrauchs Vorteile mit sich bringt. Die vorgesehene Hydraulikanordnung (Hydraulikeinrichtung) gewährleistet dabei nicht nur eine Steuerung bzw. Regelung einer Einzelkomponente, sondern berücksichtigt und überwacht bzw. beeinflusst die Performance des gesamten Fahrzeugessystems, so dass ungewollte Fahrzeugzustände automatisch verhindert und ferner optimale Betriebsbereiche des Fahrzeugs eingehalten werden können. Durch Überwachung bzw. Steuerung und Regelung einer wesentlichen Kenngröße des Fahrzeugs, nämlich dem Lastzustand an der entsprechenden mit der Anhängeeinrichtung bestückten Achse, kann ein Steuer- bzw. Regelungssystem leichter in übergreifende Fahrzeug- und/oder Anbaugerät-Steuerungssysteme bzw. Regelungssysteme integriert werden. Dadurch, dass auch kein unkontrolliertes Abfließen von Hydraulikflüssigkeit aus dem Hydraulikzylinder der Anhängeeinrichtung vorgesehen ist, kann die Gefahr von Kavitation in den Hydraulikzylindern der Anhängeeinrichtung deutlich verringert werden, was die Regelgüte verbessert und kavitationsbedingte Schäden reduziert.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Seitenansicht eines erfindungsgemäßen Fahrzeugs mit einer hydraulischen Frontanhängeeinrichtung und
- Fig. 2: einen schematischen Hydraulikschaltplan einer Hydraulikanordnung für das Fahrzeug gemäß Figur 1.

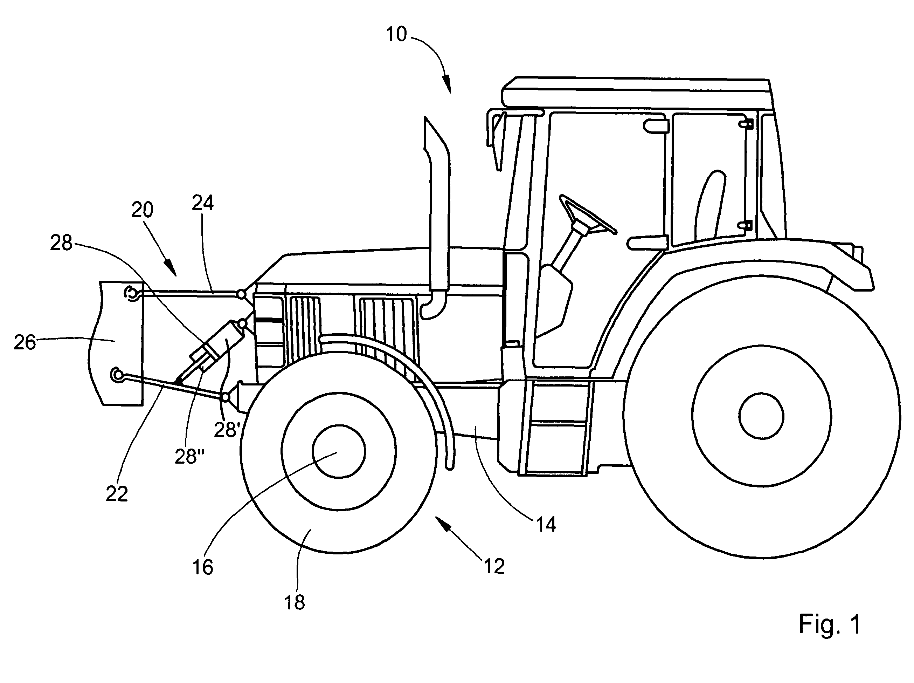

Figur 1 zeigt exemplarisch ein landwirtschaftliches Fahrzeug (10) in Form eines Schleppers oder Traktors, wobei auch andere landwirtschaftliche Fahrzeuge wie z.B. Teleskoplader unter den Begriff landwirtschaftliche Fahrzeuge fallen. Das Fahrzeug 10 umfasst eine Achsanordnung 12 mit einer zu einem Rahmen 14 des Fahrzeugs 10 hydraulisch gefederten Achse 16, die mit angetriebenen oder nicht angetriebenen Rädern 18 bestückt ist.

Das Fahrzeug 10 umfasst ferner eine Anhängeeinrichtung 20 in Form einer Frontanhängeeinrichtung. Diese ist nur exemplarisch als Frontanhängeeinrichtung ausgebildet, es kann sich ebenso um eine Heckanhängeeinrichtung handeln. Die frontseitig zum Fahrzeug 10 angeordnete Anhängeeinrichtung 20 stellt eine Dreipunkanhängeeinrichtung dar mit zwei Unterlenkern 22 (nur einer ist zu sehen) und einem Oberlenker 24 zum Anhängen eines Arbeitsgeräts 26. Die Unterlenker 22 sind jeweils mit einem am Fahrzeug 10, vorzugsweise am Rahmen 14 des Fahrzeugs 10, befestigten doppeltwirkenden hydraulischen Kraftheber oder Hydraulikzylinder 28 verbunden, der eine erste hydraulische Kammer 28' und eine zweite hydraulische Kammer 28" umfasst. Die erste Kammer 28' ist bei dem gezeigten Ausführungsbeispiel senkseitig ausgebildet, die zweite Kammer 28" hingegen hubseitig.

Die Achsanordnung 12 ist derart ausgebildet, dass sowohl eine Pendelbewegung als auch eine Vertikalbewegung der Achse 16 zum Rahmen 14 erfolgen kann. Die Achsanordnung 12 umfasst ferner zwei Hydraulikzylinder 30, 32, die beidseitig der pendelnd gelagerten Achse 16 angeordnet sind und diese mit dem Rahmen 14 verbinden. Die beiden Hydraulikzylinder 30, 32 stellen die hydraulischen Federungszylinder dar, die jeweils zwei hydraulische Kammern 30', 30" und 32', 32" aufweisen, wobei die Kammern 30' und 32' mit einem ersten hydraulischen Speicher 34 und die Kammern 32' und 32" mit einem zweiten hydraulischen Speicher 36 verbunden sind.

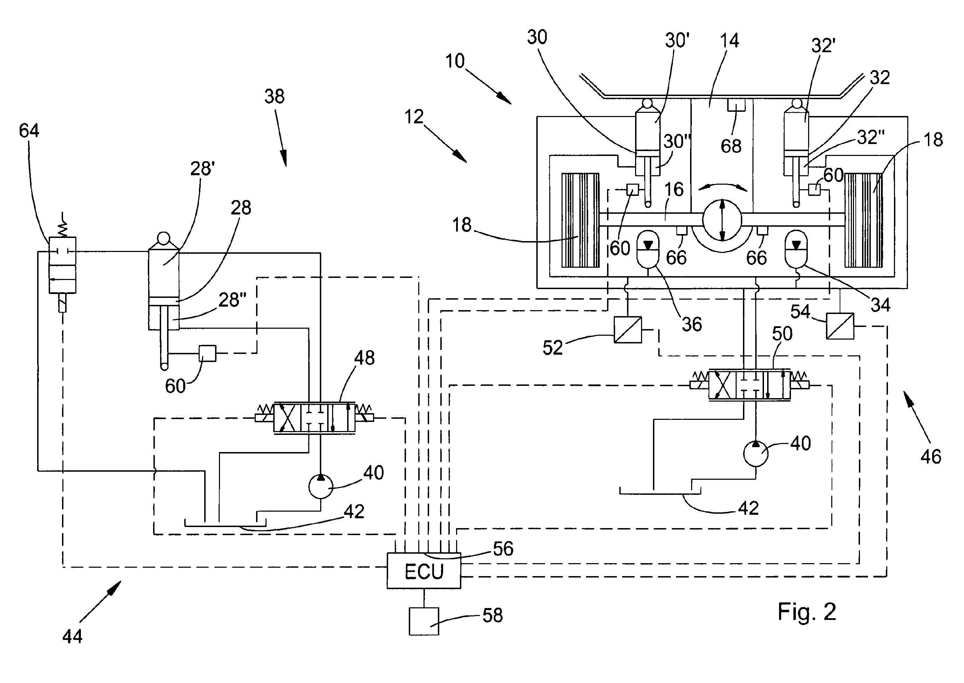

Das Fahrzeug 10 umfasst ferner eine Hydraulikanordnung 38, die schematisch in Figur 2 abgebildet ist und anhand der die hydraulische Anordnung der Hydraulikzylinder 28, 30, 32, die Ansteuerung derselben und andere hydraulische und elektrische steuerungs- bzw. regelungsrelevante Komponenten im folgenden erläutert werden.

Die Hydraulikanordnung 38 umfasst eine Hydraulikpumpe 40, durch welche sowohl die Hydraulikzylinder 28 der Anhängeeinrichtung als auch die Hydraulikzylinder 30, 32 der Achsanordnung 12 sowie die mit den Hydraulikzylindern 30, 32 verbundenen Hydraulikspeicher 34, 36 hydraulisch versorgt werden. Ferner ist ein Hydraulikreservoir oder Hydrauliktank 42 vorgesehen in den überschüssige Hydraulikflüssigkeit abgeführt bzw. benötigte Hydraulikflüssigkeit geschöpft (gepumpt) werden kann. Die Hydraulikanordnung umfasst einen ersten der Anhängeeinrichtung 20 zugeordneten Hydraulikkreislauf 44 und einen zweiten Hydraulikkreislauf 46, der der Achsanordnung 12 bzw. dem Federungssystem der Achsanordnung 12 zugeordnet ist. Beide Kreisläufe 44, 46 werden hier von derselben Hydraulikpumpe 40 und demselben Hydrauliktank 42 versorgt, wobei dies auch mit entsprechenden getrennten Komponenten erfolgen kann.

Der Hydraulikkreislauf 44 umfasst ein Steuerventil 48, welches als elektronisch ansteuerbares Proportionalventil ausgebildet ist. Über das Steuerventil 48 können die beiden Kammern 28', 28" der Hydraulikzylinder 28 wahlweise, elektronisch ansteuerbar, mit dem Hydrauliktank 42 oder der Hydraulikpumpe 40 hydraulisch verbunden bzw. von diesen getrennt werden.

Der Hydraulikkreislauf 46 umfasst ein Steuerventil 50, welches als elektronisch ansteuerbares Proportionalventil ausgebildet ist. In einer alternativen Ausführungsform kann das Steuerventil 50 auch als einfaches On/Off-Ventil ausgebildet sein. Über das Steuerventil 50 können die beiden Kammern 30',30" und 32', 32" der beiden Hydraulikzylinder 30, 32 wahlweise, elektronisch ansteuerbar, mit dem Hydrauliktank 42 oder der Hydraulikpumpe 40 hydraulisch verbunden bzw. von diesen getrennt werden. Eine hydraulische Verbindung der Kammern 30', 30", 32', 32" mit den Hydraulikspeichern 34, 36 ermöglicht eine federnde Pendelbewegung gegen einen durch die Hydraulikspeicher 34, 36 aufgebrachten hydraulischen Druck. Um den sich in den Kammern 30', 30", 32', 32" der Hydraulikzylinder 30, 32 aufbauenden Druck zu erfassen, sind Drucksensoren 52, 54 vorgesehen, wobei der Drucksensor 52 den Druck in den zu einander parallel geschalteten Kammern 30' und 32' und der Drucksensor 54 den Druck in den zu einander parallel geschalteten Kammern 30" und 32" erfasst. Die im vorliegenden Ausführungsbeispiel parallel geschalteten Kammern 30', 30", 32', 32" können ferner auch in einer Kreuzschaltung miteinander verbunden werden (nicht gezeigt), um eine Wankstabilisierung zu realisieren, wobei dann die Kammer 30' mit der Kammer 32" und die Kammer 30" mit der Kammer 32' verbunden werden.

Ferner ist eine elektronische Steuereinheit 56 vorgesehen, die Steuersignale zur Ansteuerung der Steuerventile 48, 50 generiert sowie Sensorsignale zur Generierung entsprechender Steuersignale für die Steuerventile 48, 50 von den Drucksensoren 52, 54 empfängt. Die Steuereinheit 56 ist mit einer Eingabeeinrichtung 58 verbunden über die weitere verschiedene, zur Generierung der Steuersignale für die Steuerventile 48, 50 benötigten bzw. relevanten Größen vorgegeben bzw. abgerufen werden können. Beispielsweise kann ein Bediener auch darüber den einen oder anderen Hydraulikkreislauf 44, 46 aktivieren oder deaktivieren. Es können ferner Vorgaben für Schwellwerte oder Grenzwerte eingegeben werden, die von der elektronischen Steuereinheit bei der Generierung von Steuersignalen berücksichtigt werden. Beispielsweise kann die Bedienperson eingeben, welcher Anpressdruck an der Anhängeeinrichtung 20 beim Betreiben eines Arbeitsgerätes 26 erwünscht ist bzw. durch die elektronische Steuerung 56 eingestellt werden soll.

Wie oben bereits erwähnt, sind die Hydraulikzylinder 30, 32 an der Achsanordnung 12 (gefederte Vorderachse) mit Hydraulikspeicher 34, 36 an beiden Kammern 30', 30" bzw. 32', 32" verbunden, wobei an beiden Hydraulikzylindern 30, 32 beide Kammern 30', 30" bzw. 32', 32" zusätzlich mit Drucksensoren 52, 54 kontinuierlich überwacht werden. Die Signale der Drucksensoren 52, 54 an der Achsanordnung 12 spiegeln dabei den Lastzustand an der Achse wider, derart, dass eine Veränderung der Drucksignale auf eine Änderung des Lastzustand hinweisen, oder umgekehrt, dass keine Veränderung der Drucksignale darauf hinweist, dass ein Grenzzustand an der Achsanordnung erreicht ist. So kann beispielsweise der Druck in den Hydraulikzylindern 30, 32 auf ein Minimum absinken, was darauf hinweist, dass die Räder 18 des Fahrzeugs an der Achsanordnung 12 ihre Bodenhaftung verlieren oder verloren haben und das Fahrzeug 10 damit manövrierunfähig wird, wobei ein minimaler Lastzustand and der Achse 16 erreicht ist. Andererseits kann beispielsweise der Druck in den Hydraulikzylindern 30, 32 auf ein Maximum ansteigen, was darauf hinweist, dass das Arbeitsgerät 26 von der Anhängeeinrichtung 20 vollständig oder nahezu vollständig angehoben wurde und diesbezüglich ein maximaler Lastzustand an der Achse 16 erreicht ist, wobei der Anpressdruck am Arbeitsgerät 26 gleich null ist. Die Drucksensorsignale werden bei der Generierung der Steuersignale für die Steuerventile 48 und/oder 50 zu Grunde gelegt, wobei die Drucksignale über einen in der Steuereinheit 56 abgelegten Algorithmus in eine resultierende Achslast bzw. in einen resultierenden Lastzustand an der Achse 16 umgerechnet werden. Anhand des berechneten Lastzustands kann somit auf den am Arbeitsgerät 26 herrschenden Anpressruck geschlossen werden und ein entsprechendes Steuersignal zur Einhaltung eines durch die Eingabeeinrichtung 58 vorgegebenen Soll-Anpressdruck von der Steuereinheit generiert werden. Dabei wird das hydraulische Steuerventil 48, welches dem Heben und Senken des Hydraulikzylinders 28 bzw. dem Frontkraftheber dient, entsprechend angesteuert. Der Hydraulikzylinder 28 bzw. der Frontkraftheber verfährt daraufhin derart in seiner Position, dass sich der geforderte Anpressdruck einstellt. Gleichzeitig wird erfasst und laufend überprüft, ob sich der oben geschilderten Grenzzustand einstellt, in dem die Bodenhaftung der Räder 18 unter ein beliebiges vorgebbares Maß absinkt (beispielsweise auch über die Eingabeeinrichtung 58 vorgebbar), so dass gegebenenfalls der Anpressdruck automatisch durch die elektronische Steuereinheit reduziert wird.

Um die Achslastposition und das Systemverhalten besser beurteilen zu können, ist es denkbar, zusätzlich noch ein Positionssignal der gefederten Achsanordnung 12 zu verarbeiten. Dazu können Positionssensoren 60 vorgesehen sein.

Die Einbeziehung eines durch einen weiteren Positionssensors 62 geliefertes Positionssignal der Position des Hydraulikzylinders 28 bzw. Frontkrafthebers zur Beurteilung des Verhaltens oder Zustands des Gesamtsystems kann ebenfalls als hilfreich erachtet werden, da so a priori abgeschätzt werden kann, wie groß die möglichen Veränderungen des Lastzustand an der Achse 16 noch werden könnten.

Das Steuerventil 48, welches den Hydraulikzylinder 28 bzw. Frontkraftheber ansteuert, ist derart mit entsprechenden Steuerkanten versehen, dass es nicht zu Kavitation im Hydraulikzylinder 28 kommen kann. Dies ist allerdings Stand der Technik und muss hier nicht weiter ausgeführt werden.

Als eine weitere Eingangsgröße in einen möglichen in der elektronischen Steuereinheit 56 abgelegten Steuer- bzw. Regelungsalgorithmus kann der Status eines Heckkrafthebers an einer zusätzlich vorhandenen heckseitigen Anhängeeinrichtung gelten (nicht gezeigt), der durch seine Bewegungen und durch Messungen (beispielsweise im Rahmen einer Zugkraftregelung) ebenfalls einen Einfluss auf den Lastzustand der Vorderachse hat.

Sollte aus welchen Gründen auch immer eine Bedienperson auf die doppelt wirkende Funktion seines Hydraulikzylinders 28 bzw. Frontkrafthebers verzichten wollen, so kann er auch dies mittels der Eingabeeinrichtung 58 vorgeben. Dazu ist vorgesehen, dass in der Zuleitung zur Senkenseite des Hydraulikzylinders 28 ein Schaltventil 64 angeordnet ist, welches elektrisch geschaltet, die Kammer 28' zum Hydrauliktank 42 hin entlastet. Mit dieser Entlastung zum Hydrauliktank hin ist es dann zwar nicht mehr möglich, den Hydraulikzylinder 28 auszufahren bzw. die Anhängeeinrichtung 20 zusätzlich auf den Boden zu drücken, um die Achse 16 so gezielt bis zum Maximalzustand zu entlasten, doch ist es immer noch möglich, die Achslast der Vorderachse im Rahmen des durch das Eigengewicht der Anhängeeinrichtung 20 und des daran gekoppelten Arbeitsgerätes 26 verursachten "normalen" Anpressdrucks zu verändern (bzw. zu belasten oder zu entlasten). Es ist somit die Funktion eines einfach wirkenden Hydraulikzylinders 28 bzw. Frontkrafthebers möglich, wie es von der Zugkraftregelung von Heckkrafthebern an heckseitigen Anhängeeinrichtungen her bekannt ist. Ferner ist es auch denkbar, an dem Steuerventil 48 eine vierte Ventilstellung (nicht gezeigt) vorzusehen, in der eine Schwimmstellung für den Hydraulikzylinder 28 realisiert wird, wobei beide Kammern 28', 28" zum Tank hin entlastet werden.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. So können beispielsweise auch Dehnungsmessstreifen 66, 68 an der Achse 16 oder an dem Rahmen 14 des Fahrzeugs 10 vorgesehen sein, die als Signalgeber für die Bestimmung bzw. Ermittlung des Lastzustands an der Achse 16 zur Steuerung der Steuerventile 48, 50 herangezogen werden.

## Patentansprüche

1. Landwirtschaftliches Fahrzeug mit einem Arbeitsgerät (26), einer hydraulischen Anhängeeinrichtung (20) zum Heben und Senken des Arbeitsgeräts (26), einer Hydraulikanordnung (38), welche wenigstens einen an der Anhängeeinrichtung (20) angeordneten doppeltwirkenden Hydraulikzylinder (28) umfasst, eine mit der Hydraulikanordnung (38) verbundene elektronische Steuereinheit (56) zur Ansteuerung der Hydraulikanordnung (38), wobei die Ansteuerung der Hydraulikanordnung (38) durch von der elektronischen Steuereinheit (56) generierte Steuersignale erfolgt und eine Druckbeaufschlagung des wenigstens einen Hydraulikzylinders (28) umfasst, und wobei an einer eine hydraulisch gefederte Achse (16) umfassenden Achsanordnung (12) des landwirtschaftlichen Fahrzeugs (10) Mittel zur Erfassung eines Lastzustands der Achse (16) vorgesehen und die Steuersignale zur Ansteuerung der Hydraulikanordnung (28) in Abhängigkeit von dem Lastzustand an der Achse (16) generierbar sind, **dadurch gekennzeichnet, dass** die Mittel zur Erfassung eines Lastzustands wenigstens einen Drucksensor (52, 54) umfassen, mit welchem ein Druck in wenigstens einem hydraulischen Federungszylinder (30, 32) der hydraulisch gefederten Achse (16) ermittelbar ist und der Lastzustand an der Achse (16) in Abhängigkeit von dem Druck ermittelbar ist, wobei der ermittelte Lastzustand der Achse (16) zur Steuerung oder Regelung eines am Arbeitsgerät (26) herrschenden Anpressdrucks auf den Boden herangezogen wird.

2. Landwirtschaftliches Fahrzeug (10) nach Anspruch 1, **dadurch gekennzeichnet, dass** die Anhängeeinrichtung (20) als Frontanhängeeinrichtung und die Achse (16) als Vorderachse ausgebildet ist.

3. Landwirtschaftliches Fahrzeug (10) nach Anspruch 1 oder 2, **dadurch gekennzeichnet, dass** die Mittel zur Erfassung eines Lastzustands wenigstens einen Dehnungsmessstreifen (66) umfassen, mit welchem eine Durchbiegung an der Achse (16) ermittelbar ist und der Lastzustand an der Achse (16) in Abhängigkeit von der Durchbiegung an der Achse (16) ermittelbar ist.

4. Landwirtschaftliches Fahrzeug (10) nach einem der Ansprüche 1 bis 3, **dadurch gekennzeichnet, dass** die Mittel zur Erfassung eines Lastzustands wenigstens einen Dehnungsmessstreifen (68) umfassen, mit welchem eine Durchbiegung an einem Rahmenteil (14) des Fahrzeugs (10) ermittelbar ist und der Lastzustand an der Achse (16) in Abhängigkeit von der Durchbiegung an dem Rahmenteil (14) ermittelbar ist.

5. Landwirtschaftliches Fahrzeug (10) nach einem der Ansprüche 1 bis 4, **dadurch gekennzeichnet, dass** wenigstens eine Kammer (28') des wenigstens einen Hydraulikzylinders (28) über ein ansteuerbares Schaltventil (64) mit einem Hydrauliktank (42) verbindbar ist.

## Claims

1. Agricultural vehicle having a working implement (26), a hydraulic coupling device (20) for lifting and lowering the working implement (26), a hydraulic arrangement (38) which comprises at least one double-acting hydraulic cylinder (28) arranged on the coupling device (20), an electronic control unit (56), connected to the hydraulic arrangement (38), for controlling the hydraulic arrangement (38), wherein the controlling of the hydraulic arrangement (38) is effected by way of control signals generated by the electronic control unit (56) and comprises application of pressure to the at least one hydraulic cylinder (28), and wherein, on an axle arrangement (12) of the agricultural vehicle (10), said axle arrangement comprising a hydraulically sprung axle (16), means for sensing a load state of the axle (16) are provided and the control signals for controlling the hydraulic arrangement (28) are generatable depending on the load state on the axle (16), **characterized in that** the means for sensing a load state comprise at least one pressure sensor (52, 54), by way of which a pressure in at least one hydraulic suspension cylinder (30, 32) of the hydraulically sprung axle (16) can be determined, and the load state on the axle (16) can be determined depending on the pressure, wherein the determined load state of the axle (16) is used to control or regulate a pressure force on the ground, said pressure force prevailing at the working implement (26).

2. Agricultural vehicle (10) according to Claim 1, **characterized in that** the coupling device (20) is in the form of a front coupling device and the axle (16) is in the form of a front axle.

3. Agricultural vehicle (10) according to Claim 1 or 2, **characterized in that** the means for sensing a load state comprise at least one strain gauge (66), by way of which deflection on the axle (16) can be determined and the load state on the axle (16) can be determined depending on the deflection on the axle (16).

4. Agricultural vehicle (10) according to one of Claims 1 to 3, **characterized in that** the means for sensing a load state comprise at least one strain gauge (68), by way of which deflection on a frame part (14) of the vehicle (10) can be determined and the load state on the axle (16) can be determined depending on the deflection on the frame part (14).

5. Agricultural vehicle (10) according to one of Claims 1 to 4, **characterized in that** at least one chamber (28') of the at least one hydraulic cylinder (28) is connectable to a hydraulic tank (42) via a controllable switching valve (64).

## Revendications

1. Véhicule agricole pourvu d'un appareil de travail (26), d'un dispositif d'attelage (20) hydraulique servant à monter et descendre l'appareil de travail (26), d'un agencement hydraulique (38) comprenant au moins un vérin hydraulique (28) à double action disposé au niveau du dispositif d'attelage (20), une unité de commande électronique (56) reliée à l'agencement hydraulique (38) pour commander un agencement hydraulique (38), la commande de l'agencement hydraulique (38) étant réalisée par le biais des signaux de commande générés par l'unité de commande électronique (56) et comprenant une alimentation en pression de l'au moins un vérin hydraulique (28), et des moyens de détection d'un état de charge de l'essieu (16) étant prévus au niveau d'un essieu (16) chargé par ressort de façon hydraulique comprenant l'agencement d'essieu (12) du véhicule agricole (10) et les signaux de commande permettant de commander l'agencement hydraulique (28) pouvant être générés en fonction de l'état de charge au niveau de l'essieu (16), **caractérisé en ce que** les moyens de détection d'un état de charge comprennent au moins un capteur de pression (52, 54) à l'aide duquel une pression peut être déterminée dans au moins un vérin de suspension (30, 32) hydraulique de l'essieu (16) chargé par ressort de façon hydraulique et que l'état de charge au niveau de l'essieu (16) peut être déterminé en fonction de la pression, l'état de charge déterminé de l'essieu (16) étant utilisé pour commander ou régler une pression de compression exercée sur le sol et appliquée à l'appareil de travail (26).

2. Véhicule agricole (10) selon la revendication 1, **caractérisé en ce que** le dispositif d'attelage (20) prend la forme d'un dispositif d'attelage avant et que l'essieu (16) prend la forme d'un essieu avant.

3. Véhicule agricole (10) selon la revendication 1 ou 2, **caractérisé en ce que** les moyens de détection d'un état de charge comprennent au moins une bande de mesure de dilatation (66) à l'aide de laquelle une flèche peut être déterminée au niveau de l'essieu (16) et que l'état de charge peut être déterminé au niveau de l'essieu (16) en fonction de la flèche observée au niveau de l'essieu (16).

4. Véhicule agricole (10) selon l'une quelconque des revendications 1 à 3, **caractérisé en ce que** les moyens de détection d'un état de charge comprennent au moins une bande de mesure de dilatation (68) à l'aide de laquelle une flèche peut être déterminée au niveau d'une partie de châssis (14) du véhicule automobile (10) et que l'état de charge peut être déterminé au niveau de l'essieu (16) en fonction de la flèche observée au niveau de la partie de châssis (14).

5. Véhicule agricole (10) selon l'une quelconque des revendications 1 à 4, **caractérisé en ce qu'**au moins une chambre (28') de l'au moins un vérin hydraulique (28) peut être reliée à un réservoir hydraulique (42) par le biais d'une soupape de commutation (64) commandable.
